# FASCICULE DE BREVET EUROPEEN

(11) **EP 0 762 000 B1**
(45) Date de publication et mention de la délivrance du brevet: **09.10.2002**
(21) Numéro de dépôt: 96401737.0
(22) Date de dépôt: 06.08.1996
(51) Int. Cl.: F16D 3/68, F16D 3/66

(54) **Dispositif de liaison et de transmission de puissance entre deux pièces tournant autour d'un même axe**
Verbindungs- und Kraftübertragungsvorrichtung zwischen zwei koaxialen drehenden Teilen
Connection and powerdrive device between two coaxial rotating parts

(30) Priorité: 23.08.1995 FR 9510013
(43) Date de publication de la demande: 12.03.1997
(73) Titulaire: HUTCHINSON, 75008 Paris (FR)
(72) Inventeur: Ciolczyk, Jean-Pierre, 45120 Chalette S/Loing (FR)
(74) Mandataire: Ramey, Daniel

(56) Documents cités:
- DE-A- 3 940 365
- FR-A- 1 492 986
- GB-A- 166 939

## Description

L'invention concerne un dispositif de liaison et de transmission de puissance entre deux pièces tournant autour d'un même axe, ce dispositif étant utilisable notamment, mais non exclusivement, dans un véhicule automobile pour une transmission de puissance entre un moteur thermique et les roues motrices du véhicule.

Les transmissions classiques entre des pièces tournantes co-axiales sont en général rigides et n'ont aucune progressivité, ni aucune capacité d'absorption des vibrations, ce qui amène à les compléter par des dispositifs spéciaux de filtrage ou d'amortissement des vibrations dont l'efficacité dépend en grande partie de leur complexité et de leur coût.

On a déjà proposé d'utiliser dans ces transmissions des blocs de caoutchouc plein qui se déforment en compression à la transmission d'un couple, mais le débattement angulaire que l'on peut obtenir est faible et le filtrage des vibrations est médiocre.

On a également proposé d'utiliser dans ces transmissions des ressorts métalliques de différentes raideurs agencés en série pour obtenir une progressivité dans la transmission d'un couple.

Toutefois, dans ce cas, la variation du couple en fonction du débattement angulaire n'est pas continue, du fait que l'on passe brusquement d'une raideur à une autre.

Le document GB-A-166 939 décrit un dispositif de liaison et de transmission de puissance entre deux pièces tournant autour d'un même axe, ces deux pièces étant engagées l'une dans l'autre et reliées en rotation par des ressorts et des butées en caoutchouc qui sont dans un plan perpendiculaire à l'axe de rotation.

Le document DE-A-39 40 365 décrit un dispositif de liaison et de transmission de puissance entre deux pièces tournant autour d'un même axe selon le préambule de la revendication 1.

L'invention a pour objet un dispositif de transmission qui satisfasse à un certain nombre de conditions telles notamment que :
- pouvoir transmettre avec une bonne progressivité un couple variable susceptible d'atteindre des valeurs maximum relativement importantes,
- permettre un bon amortissement des vibrations,
- être de structure simple, d'encombrement réduit et de coût relativement faible,
- avoir une fiabilité et une durée de vie relativement élevées.

Elle propose, à cet effet, un dispositif de liaison et de transmission de puissance entre deux pièces tournant autour d'un même axe selon la revendication 1.

Un tel dispositif permet de passer un couple de rotation important, typiquement de l'ordre de 300 Nm dans le cas d'une transmission pour véhicule automobile, avec une bonne progressivité, la valeur maximum du débattement angulaire entre les deux pièces pouvant atteindre 30 à 40° environ, et avec un bon amortissement des vibrations, en particulier au ralenti.

Selon d'autres caractéristiques de l'invention, les ressorts sont des ressorts à lames de flexion, réalisés en un matériau composite comprenant une matière plastique dans laquelle sont noyées des fibres continues telles que des fibres de verre, de carbone ou d'aramide par exemple, qui sont orientées de préférence dans le sens des efforts agissant sur les ressorts lors de la rotation des pièces.

Dans un mode de réalisation particulier de l'invention, les butées en caoutchouc sont portées par les branches latérales des ressorts et assurent également la fixation de ces derniers sur les pièces précitées.

Les ressorts peuvent être de forme ondulée, par exemple en U ou en W, et sont fixés par une extrémité sur une patte ou paroi radiale d'une des pièces et par une autre extrémité sur une patte ou paroi radiale de l'autre pièce.

En variante, les ressorts ondulés peuvent présenter une partie médiane fixée sur une patte ou paroi radiale d'une des pièces et des extrémités fixées sur des pattes ou parois radiales de l'autre pièce.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
la figure 1 est une vue schématique en coupe transversale d'un dispositif selon l'invention, la coupe étant faite selon la ligne I-I de la figure 2 ;
la figure 2 est une vue schématique en coupe axiale de ce dispositif, selon la ligne II-II de la figure 1 ;
la figure 3 est une vue schématique en élévation d'une variante de réalisation du dispositif selon l'invention ;
la figure 4 est une vue schématique en coupe axiale d'une autre variante de ce dispositif ;
la figure 5 est un graphe représentant la variation du couple transmis en fonction du débattement angulaire dans un dispositif selon l'invention.

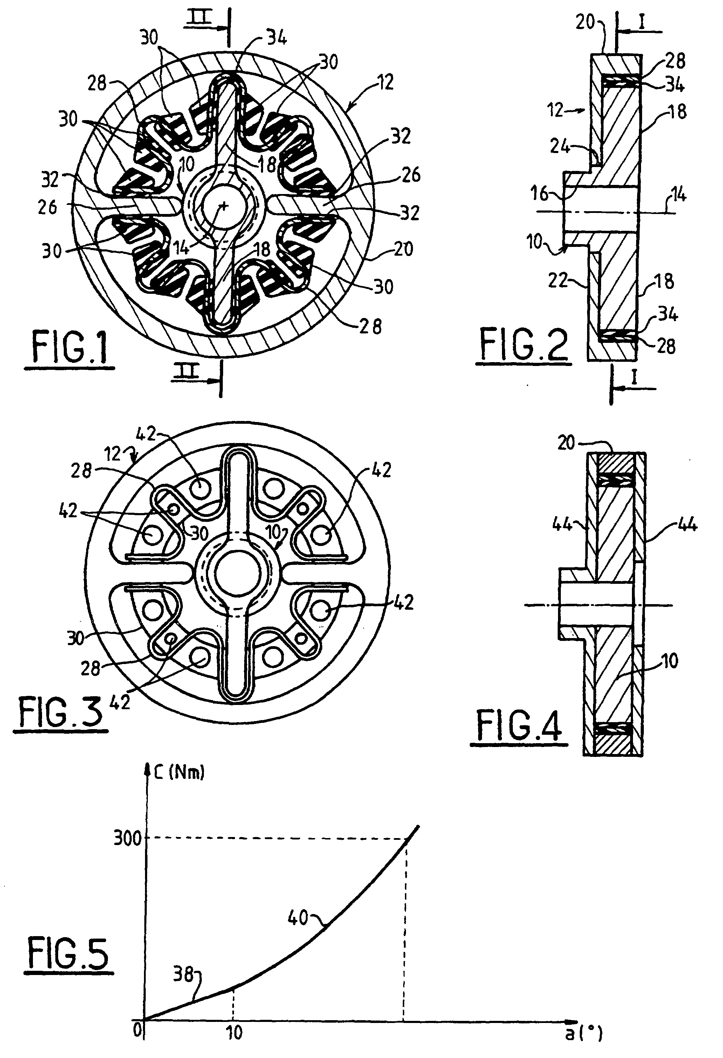

Le dispositif représenté aux figures 1 et 2 comprend deux pièces 10 et 12 respectivement, montées à rotation autour d'un axe commun 14, la pièce 10 étant par exemple menante et reliée à un arbre moteur (non représenté) par l'intermédiaire d'un passage axial 16 formé dans la pièce 10, la pièce 12 étant alors menée et reliée à une pièce entraînée en rotation (non représentée) par tout moyen approprié.

La pièce 10 est de forme générale cylindrique tubulaire et comporte, dans l'exemple représenté, deux pattes radiales 18 diamétralement opposées qui s'étendent vers l'extérieur par rapport à l'axe 14 et qui sont destinées à servir de support et de zones de fixation à des moyens de transmission de couple.

La seconde pièce 12 comprend une paroi cylindrique 20 dont le diamètre interne est légèrement supérieur au diamètre externe des pattes 18 de la pièce 10 et une paroi de fond 22 comportant un orifice axial de centrage sur un épaulement périphérique 24 de la première pièce 10, les deux pièces 10 et 12 étant engagées l'une dans l'autre de façon à ce que les deux pattes radiales 18 de la première pièce 10 se trouvent à l'intérieur de la seconde pièce 12, au contact ou au voisinage immédiat de la paroi de fond 22 de celle-ci, et sont entourées extérieurement par la paroi cylindrique 20 de la seconde pièce 12, comme on le voit bien en figure 2.

La seconde pièce 12 comprend également deux pattes radiales 26 diamétralement opposées, qui s'étendent vers l'intérieur depuis la surface interne de la paroi cylindrique 20 en direction de la surface cylindrique extérieure de la pièce 10, et par exemple jusqu'à venir sensiblement au contact de celle-ci comme représenté en figure 1, à des fins de centrage et d'alignement axial des deux pièces l'une par rapport à l'autre.

Les pattes radiales 26 de la seconde pièce 12 servent également de support et de fixation aux moyens de transmission de couple qui sont ici constitués par des ressorts à lame de flexion 28 en matériau composite associés à des butées 30 en un matériau tel que du caoutchouc, un élastomère ou analogue élastiquement déformable en compression, ces ressorts 28 et les butées 30 étant montés dans un même plan transversal entre les pattes radiales 18 de la première pièce 10 et les pattes radiales 26 de la seconde pièce 12, de façon symétrique par rapport à l'axe 14.

Les ressorts 28 en matériau composite sont de forme générale ondulée, par exemple en U, en W, en double W et sont réalisés en une matière plastique (thermoplastique ou thermodurcissable) renforcée de fibres continues, par exemple de verre, de carbone ou d'aramide, qui sont orientées dans le sens des efforts appliqués aux ressorts lors de la transmission d'un couple de rotation entre les pièces 10 et 12. Les butées 30 en caoutchouc ou analogue sont destinées à fonctionner en parallèle avec les ressorts 28 et, pour réduire l'épaisseur axiale du dispositif selon l'invention, sont portées par les branches de ces ressorts comme représenté en figure 1.

La matière des butées 30 est choisie en fonction des caractéristiques dynamiques et d'amortissement requises et peut être par exemple du caoutchouc naturel, un caoutchouc synthétique du type EPDM, un caoutchouc butyle, un silicone, etc.

Ces butées sont formées sur les deux faces des branches des ressorts 28 et assurent également la fixation des ressorts sur les pattes radiales 18 et 26 des deux pièces 10 et 12 (qui peuvent être en toute matière appropriée, métal ou matière plastique par exemple).

Dans l'exemple de la figure 1, le dispositif selon l'invention comprend deux ressorts 28 qui s'étendent angulairement chacun sur 180°, dont les extrémités sont fixées sur les pattes radiales 26 de la seconde pièce 12 par l'intermédiaire d'une couche 32 de la matière des butées 30 et dont la partie médiane est fixée sur une patte radiale 18 de la première pièce 10 par l'intermédiaire d'une couche 34 de la matière des butées 30.

En position de repos, lorsque les pièces 10 et 12 ne sont soumises à aucun effort de rotation ou de torsion, elles occupent la position représentée en figure 1 où les deux pattes radiales 18 de la première pièce 10 s'étendent dans une direction perpendiculaire à celle des deux pattes radiales 26 de la seconde pièce 12.

Si l'on applique un couple de rotation à la première pièce 10, celle-ci va commencer à tourner en déformant élastiquement les ressorts 28 dans un premier temps, jusqu'à ce que les butées 30 portées par les branches des ressorts soient appliquées les unes contre les autres, puis dans un deuxième temps en déformant élastiquement en compression ces butées, de façon plus ou moins importante en fonction du couple moteur appliqué à la première pièce 10, de l'inertie de la chaîne de transmission reliée en aval à la seconde pièce 12 et d'un couple résistant éventuellement appliqué à la seconde pièce 12.

La raideur des ressorts 28, les distances angulaires entre les butées 30 consécutives et les caractéristiques de déformation élastique des butées 30 déterminent la progressivité de la transmission du couple, le débattement angulaire maximum entre les pièces 10 et 12 pouvant être de l'ordre de 30 à 40°.

Le graphe de la figure 5 est une courbe représentant la variation du couple transmis C en fonction du débattement angulaire a entre les pièces 10 et 12, cette courbe comprenant une première partie sensiblement rectiligne 38 correspondant à la déformation du ressort 28 sans compression des butées 30, cette première partie 38 s'étendant depuis l'origine sur un débattement angulaire de l'ordre de 10° par exemple, et une seconde partie incurvée 40 représentant la progressivité de la transmission du couple due à la compression des butées 30, cette seconde partie 40 s'étendant jusqu'à un débattement angulaire maximal de l'ordre de 30 à 40° pour lequel un couple ayant une valeur typiquement de l'ordre de 300 Nm dans le domaine automobile, est transmis à la pièce 12.

Une raideur relativement faible des ressorts 28 assure un excellent filtrage des vibrations au ralenti.

Le débattement angulaire entre les pièces 10 et 12 peut provoquer un frottement des butées en caoutchouc 30 sur la paroi de fond 22 de la seconde pièce 20. Ce frottement peut être réduit en prévoyant sur la face interne de la paroi de fond un revêtement de matière à faible coefficient de frottement, par exemple de polyéthylène à haute masse moléculaire, de "TEFLON"®, ou encore d'un vernis contenant du bisulfure de molybdène. On peut également, lorsque la paroi de fond 22 est métallique, déposer sur sa face intérieure un mélange nickel-"TEFLON"®.

La variante de réalisation représentée en figure 3 diffère du mode de réalisation des figures 1 et 2 en ce que les butées 30 associées à chaque ressort composite 28 forment un anneau sensiblement continu qui s'étend sur 180° d'une extrémité du ressort à l'autre et qui comporte des orifices traversants 42 facilitant sa déformation en compression et en extension.

Dans la variante de réalisation de la figure 4, la pièce 12 est réduite à une bague cylindrique 20 qui est guidée entre deux flasques annulaires 44 portés par la première pièce 10. Ces deux flasques 44, dont les faces internes peuvent comprendre un revêtement de matière à faible coefficient de frottement comme précité, évitent tout risque de déformation axiale des ressorts composites 28, notamment de leur partie située au milieu entre une patte radiale 18 de la pièce 10 et une patte radiale 26 de la pièce 12.

En variante, les flasques 44 pourraient bien entendu être portés par la seconde pièce 12.

Le nombre de pattes radiales 18 de chaque pièce 10, 12 est de deux dans les exemples représentés aux dessins mais pourrait être supérieur en fonction de la valeur maximum recherchée du débattement angulaire entre les deux pièces.

La structure symétrique du dispositif autour de son axe de rotation permet de l'utiliser dans un sens de rotation ou dans l'autre.

Comme les butées en caoutchouc 30 qui travaillent en compression dans un sens de rotation ne sont pas celles qui travaillent en compression dans l'autre sens de rotation, on peut utiliser des butées ayant certaines caractéristiques de compression pour un sens de rotation et des butées ayant d'autres caractéristiques de compression pour l'autre sens de rotation.

Cela permet de différencier les courbes de variation du couple en fonction du débattement angulaire pour les deux sens de rotation.

De façon générale, le dispositif selon l'invention permet de transmettre un couple important avec une bonne progressivité, pour un encombrement réduit, le diamètre extérieur des dispositifs représentés aux figures 1 à 4 étant inférieur à 160 mm environ et leur épaisseur axiale étant inférieure à 20 mm environ par exemple, dans le cas d'une application à une transmission pour véhicule automobile.

## Revendications

1. Dispositif de liaison et de transmission de puissance entre deux pièces tournant autour d'un même axe, comprenant des moyens d'amortissement des vibrations, les deux pièces (10, 12) étant engagées axialement l'une dans l'autre et étant reliées en rotation par des ressorts (28) à lames de flexion associés à des butées (30) en caoutchouc ou matière analogue élastiquement déformable en compression, les ressorts (28) et les butées (30) étant agencés dans un plan perpendiculaire à l'axe de rotation, et les positions angulaires relatives des butées (30) et leurs caractéristiques de compression définissant d'une part une valeur maximum de débattement angulaire entre les deux pièces (10, 12) et d'autre part, en combinaison avec les ressorts (28), une progressivité de la transmission d'un couple de rotation entre les deux pièces **caractérisé en ce que** les butées (30) sont portées par les branches latérales des ressorts (28) et que la progressivité est telle que les ressorts (28) sont déformés élastiquement en premier, jusqu'à ce que les butées (30) soient en contact les unes avec les autres, puis les butées (30) sont déformées élastiquement en compression.

2. Dispositif selon la revendication 1 ou 2, **caractérisé en ce que** les ressorts (28) sont en un matériau composite constitué d'une matière plastique dans laquelle sont noyées des fibres continues telles que des fibres de verre, de carbone ou d'aramide par exemple.

3. Dispositif selon la revendication 2, **caractérisé en ce que** les fibres sont orientées dans le sens des efforts agissant sur les ressorts (28) lors de la rotation des pièces.

4. Dispositif selon l'une des revendications précédentes, **caractérisé en ce que** les ressorts (28) et les butées (30) sont agencés entre des pattes ou parois radiales (18, 26) des deux pièces (10, 12), de façon symétrique par rapport à l'axe de rotation (14).

5. Dispositif selon l'une des revendications précédentes, **caractérisé en ce que** les ressorts (28) sont de forme générale ondulée et sont fixés par une extrémité sur une patte radiale (26) d'une des pièces et par une autre extrémité sur une patte radiale de l'autre pièce ou bien sont fixés par leurs extrémités sur des pattes radiales (26) d'une des pièces et par leur partie médiane sur une patte radiale (18) de l'autre pièce.

6. Dispositif selon l'une des revendications précédentes, **caractérisé en ce que** les butées (30) sont fixées sur les deux faces des branches des ressorts (28) et servent également à la fixation des ressorts sur les deux pièces (10, 12).

7. Dispositif selon l'une des revendications précédentes, **caractérisé en ce que** les butées (30) s'étendent de façon sensiblement continue entre les extrémités des ressorts et sont alvéolées.

8. Dispositif selon l'une des revendications précédentes, **caractérisé en ce que** l'une (12) des pièces comprend une paroi cylindrique (20) formée avec des pattes radiales (26) orientées vers l'axe de rotation (14), l'autre pièce (10) étant logée à l'intérieur de cette paroi cylindrique (20) et étant formée avec des pattes radiales (18) orientées vers cette paroi cylindrique, le nombre de pattes radiales de l'une ou de l'autre pièce étant supérieur ou égal à deux.

9. Dispositif selon la revendication 8, **caractérisé en ce que** ladite autre pièce (10) est guidée et alignée axialement par les pattes radiales (26) de la première pièce citée (12).

10. Dispositif selon l'une des revendications précédentes, **caractérisé en ce que** les butées (30) qui travaillent en compression dans un sens de rotation du dispositif, ont des caractéristiques de compression différentes de celles des butées (30) qui travaillent en compression dans l'autre sens de rotation.

11. Dispositif selon l'une des revendications précédentes, **caractérisé en ce que** les ressorts (28) et les butées (30) sont agencés entre des flasques annulaires (44) portés par l'une des pièces précitées et s'opposant aux déformations axiales des ressorts (28).

12. Dispositif selon la revendication 11, **caractérisé en ce que** les faces des flasques annulaires (44) tournées vers les ressorts (28) et les butées (30) comportent un revêtement d'une matière à faible coefficient de frottement.

## Claims

1. A device for linking and transmitting power between two rotary parts about a common axis, the device including vibration damping means, the two parts (10, 12) being engaged axially one in the other and being connected in rotation by flexible blade springs (28) associated with abutments (30) of rubber or analogous material that is elastically deformable in compression, the springs (28) and the abutments (30) being organized in a plane perpendicular to the axis of rotation, and the relative angular positions of the abutments (30) and their compression characteristics defining both a maximum value for relative angular displacement between the two parts (10, 12) and, in combination with the springs (28), rotary torque transmission between the two parts that is progressive, the device being **characterized in that** the abutments (30) are carried by the lateral branches of the springs (28), and **in that** said progressive transmission is such that the springs (28) are firstly deformed elastically until the abutments (30) come into contact with one other, after which the abutments (30) are deformed elastically in compression.

2. A device according to claim 1, **characterized in that** the springs (28) are made of composite material constituted by a plastics material in which continuous fibers such as glass fibers, carbon fibers, or aramid fibers, for example are embedded.

3. A device according to claim 2, **characterized in that** the fibers are oriented in the direction of forces acting on the springs (28) while the parts are rotating.

4. A device according to any preceding claim, **characterized in that** the springs (28) and the abutments (30) are disposed between radial walls or tabs (18, 26) of the two parts (10, 12) in symmetrical manner about the axis of rotation (14).

5. A device according to any preceding claim, **characterized in that** the springs (28) are generally undulating in shape and are fixed via one end to a radial tab (26) of one of the parts and via another end to a radial tab of the other part, or else are fixed at both ends to radial tabs (26) of one of the parts and via their middle portions to respective radial tabs (18) of the other part.

6. A device according to any preceding claim, **characterized in that** the abutments (30) are fixed on both faces of the branches of the springs (28) and serve also for fixing the springs to the two parts (10, 12).

7. A device according to any preceding claim, **characterized in that** the abutments (30) extend substantially continuously between the ends of the springs and have openings therein.

8. A device according to any preceding claim, **characterized in that** one of the parts (12) has a cylindrical wall (20) formed with radial tabs (26) extending towards the axis of rotation (14), while the other part (10) is received within said cylindrical wall (20) and is formed with radial tabs (18) extending towards said cylindrical wall, the number of radial tabs on each part being greater than or equal to two.

9. A device according to claim 8, **characterized in that** said other part (10) is axially guided and aligned by the radial tabs (26) of the first-mentioned part (12).

10. A device according to any preceding claim, **characterized in that** the abutments (30) which work in compression in one direction of rotation of the device have compression characteristics that differ from the characteristics of the abutments (30) which work in compression in the opposite direction of rotation.

11. A device according to any preceding claim, **characterized in that** the springs (28) and the abutments (30) are organized between annular end plates (44) carried by one of the above-mentioned parts and opposing axial deformation of the springs (28).

12. A device according to claim 11, **characterized in that** the faces of the annular end plates (44) directed towards the springs (28) and the abutments (30) are coated in low friction material.

## Patentansprüche

1. Vorrichtung für die Verbindung und die Kraftübertragung zwischen zwei Teilen, die um eine gleiche Achse drehbar sind, umfassend Mittel für die Dämpfung von Vibrationen, wobei die beiden Teile (10, 12) durch Federn (28) mit Durchfederungs- bzw. -biegungsblättern, die mit Anschlägen (30) aus Kautschuk oder ähnlichem Material, der bzw. das elastisch unter Kompression deformierbar ist, verbunden sind, axial miteinander im Eingriff sind und in Rotation verbunden sind, wobei die Federn (28) und die Anschläge (30) in einer zur Achse der Rotation senkrechten Ebene gegliedert bzw. gestaltet bzw. verbunden sind, und die relativen Winkelpositionen der Anschläge (30) und ihre Kompressionscharakteristika einerseits einen maximalen wert des Winkelausschlags zwischen den beiden Teilen (10, 12) und andererseits in Kombination mit den Federn (28) eine Progression der Übertragung eines Drehmoments der Rotation zwischen den beiden Teilen definieren, **dadurch gekennzeichnet, dass** die Anschläge (30) durch laterale Schenkel der Feder (28) getragen bzw. gehalten sind, und dass die Progression derart ist, dass die Federn (28) zuerst elastisch deformiert werden, bis die Anschläge (30) in Kontakt miteinander sind, wonach die Anschläge (30) elastisch durch Kompression deformiert werden.

2. Einrichtung gemäß dem Anspruch 1, **dadurch gekennzeichnet, dass** die Federn (28) aus einem zusammengesetzten Material bzw. Verbundmaterial sind, das von einem Plastik- bzw. Kunststoffmaterial gebildet ist, in welchem kontinuierliche Fasern versenkt sind, wie z. B. Fasern aus Glas, aus Kohlenstoff oder aus Aramid.

3. Einrichtung gemäß Anspruch 2, **dadurch gekennzeichnet, dass** die Fasern in der Richtung der Beanspruchungen ausgerichtet sind, welche auf die Federn (28) während der Rotation der Teile wirken.

4. Einrichtung gemäß einem der vorhergehenden Ansprüche, **dadurch gekennzeichnet, dass** die Federn (28) und die Anschläge (30) zwischen radialen Platten bzw. Laschen bzw. Halterungen oder Wänden (18, 26) der beiden Teile (10, 12) in symmetrischer Art und Weise mit Bezug auf die Achse der Rotation (14) angeordnet sind.

5. Einrichtung gemäß einem der vorhergehenden Ansprüche, **dadurch gekennzeichnet, dass** die Federn (28) von allgemein gewellter bzw. geriffelter Form sind und durch ein Ende auf einer radialen Platte bzw. Lasche bzw. Halterung (26) des einen der Teile sowie durch ein anderes Ende auf einer radialen Platte bzw. Lasche bzw. Halterung des anderen Teils befestigt sind oder auch durch ihre Enden auf den radialen Platten bzw. Laschen bzw. Halterungen (26) des einen der Teile und durch ihren mittleren Teil auf einer Platte bzw. Lasche bzw. Halterung (18) des anderen Teils befestigt sind.

6. Einrichtung gemäß einem der vorhergehenden Ansprüche, **dadurch gekennzeichnet, dass** die Anschläge (30) auf den beiden Seiten der Schenkel der Federn (28) befestigt sind und außerdem zur Befestigung der Federn auf den beiden Teilen (10, 12) dienen.

7. Einrichtung gemäß einem der vorhergehenden Ansprüche, **dadurch gekennzeichnet, dass** sich die Anschläge (30) in im Wesentlichen kontinuierlicher Art und Weise zwischen den Enden der Federn erstrecken und zellen- bzw. wabenartig sind.

8. Einrichtung gemäß einem der vorhergehenden Ansprüche, **dadurch gekennzeichnet, dass** das eine (12) der Teile eine zylindrische Wand (20) umfasst, die mit radialen Platten bzw. Laschen bzw. Halterungen (26) ausgebildet ist, welche nach der Achse der Rotation (14) zu ausgerichtet sind, wobei das andere Teil (10) im Inneren dieser zylindrischen wand (20) bzw. innen von dieser zylindrischen Wand (20) untergebracht ist und mit radialen Platten bzw. Laschen bzw. Halterungen (18) ausgebildet ist, die nach dieser zylindrischen Wand zu ausgerichtet sind, wobei die Anzahl der radialen Platten bzw. Laschen bzw. Halterungen des einen oder des anderen Teils größer oder gleich zwei ist.

9. Einrichtung gemäß Anspruch 8, **dadurch gekennzeichnet, dass** das genannte andere Teil (10) axial durch die radialen Platten bzw. Laschen bzw. Halterungen (26) des genannten ersten Teils (12) geführt und ausgerichtet ist.

10. Einrichtung gemäß einem der vorhergehenden Ansprüche, **dadurch gekennzeichnet, dass** die Anschläge (30), welche in einer Richtung der Rotation der Einrichtung in Kompression arbeiten, Kompressionscharakteristika haben, welche unterschiedlich von jenen der Anschläge (30) sind, die in der anderen Richtung der Rotation in Kompression arbeiten.

11. Einrichtung gemäß einem der vorhergehenden Ansprüche, **dadurch gekennzeichnet, dass** die Federn (28) und die Anschläge (30) zwischen ringförmigen Flanschen (44), welche durch das eine der vorgenannten Teile getragen bzw. gehalten sind und axialen Deformationen der Federn (28) entgegenwirken, angeordnet sind.

12. Einrichtung gemäß Anspruch 11, **dadurch gekennzeichnet, dass** die den Federn (28) und den Anschlägen (30) zugewandten Seiten der ringförmigen Flansche (44) einen Belag bzw. eine Abdeckung aus einem Material mit geringem Reibungskoeffizienten haben.
